# EUROPÄISCHE PATENTANMELDUNG

(11) **EP 1 338 398 A1**
(43) Veröffentlichungstag der Anmeldung: **27.08.2003**
(21) Anmeldenummer: 03003604.0
(22) Anmeldetag: 17.02.2003
(51) Int. Cl.: B29C 45/16, B29C 45/28

(54) **Vorrichtung zum Herstellen von mehrkomponentigen Kunststoffformteilen**

(30) Priorität: 20.02.2002 DE 10207065
(71) Anmelder: Demag Ergotech GmbH, 90571 Schwaig (DE)
(72) Erfinder: Seibold, Günther, 91126 Schwabach (DE); Bänsch, Klaus-Peter, 90542 Eckental (DE)
(74) Vertreter: Wilhelm, Ludwig, Dipl.-Phys.

(57) **Zusammenfassung**

Beschrieben wird eine Vorrichtung zum Spritzgießen von mehrkomponentigen Kunststoffformteilen, mit Formhälften (7,8), einem verschiebbaren Kern (10), sowie wenigstens einer Nadelverschlussdüse (21) mit mehrfach verstellbaren Düsennadeln (24), die derart in mehrere Stellungen verfahrbar sind, dass die Düsennadeln (24) neben der Offen- und Geschlossenstellung in weitere Stellungen verfahrbar sind, dergestalt, dass die Düsennadeln (24) in den verschiedenen weiteren Stellungen zusammen mit dem Kern (10) und den beiden Formhälften (7, 8) verschiedene Kavitäten (28, 29) für verschiedene Kunststoffkomponenten (2, 3) bilden. Die Erfindung zeichnet sich dadurch aus, dass der Kern (10) und eine oder mehrere der mit den mehrfach verstellbaren Düsennadeln (24) ausgestatteten Nadelverschlüssdüsen (21) in derselben Formhälfte (8) angeordnet sind, dass diese Nadelverschlussdüsen (21) in dem Kern (10) befestigt sind und dass der Kern (10) eine Bohrung (38) aufweist, durch die die Düsennadeln (24) dieser Nadelverschlussdüsen (21) hindurch verfahrbar sind.

## Beschreibung

Die Erfindung betrifft eine Vorrichtung zum Herstellen von mehrkomponentigen Kunstsotffformteilen gemäß den Oberbegriffen der nebengeordneten Patentansprüche 1 und 2.

Bei der Herstellung von mehrkomponentigen Kunststoffformteilen im Spritzgießverfahren ist es aus dem Stand der Technik bekannt, zwischen den Werkzeugaufspannplatten einer Spritzgießmaschine drehbare Spritzgießwerkzeuge zu verwenden, die in den verschiedenen Stellungen unterschiedliche Kavitäten ausbilden (siehe zum Beispiel DE 41 27 621 C1, WO 98/35808, US 5,246,065).

Nachteilig ist, dass hierbei grundsätzlich ein Drehtisch mit geeigneter Lagerung sowie Antriebsmittel zum Drehen des Drehtisches erforderlich sind. Ausserdem müssen die Spritzgießwerkzeuge in ihrer lateralen Ausdehnung geeignet groß ausgebildet werden, damit eine der Anzahl an Spritzschritten entsprechende Anzahl an Formnestern nebeneinander ausbildbar ist.

Zur Behebung dieses Nachteils ist aus der gattungsbildenden DE 195 08 509 A1 eine Vorrichtung zur Herstellung von Gefäßdeckeln bekannt, bei der ohne Verwendung eines Drehtisches zwischen zwei Formhälften unterschiedlich gestaltete Kavitäten gebildet werden können, wie nachfolgend näher erläutert werden soll:
Die Vorrichtung gemäß dem Stand der Technik weist eine erste, untere Formhälfte, eine zweite, obere Formhälfte, sowie in der unteren Formhälfte ein zylindrisches Werkzeugmittelteil und einen dieses umgebenden, hohlzylindrischen Kern auf. Mittels einer Antriebseinrichtung kann der Kern vor- und zurückgefahren werden. Das Einspritzen der Thermoplastkomponente für den Gefäßdeckel erfolgt über Heißkanaldüsen in der Trennebene der Formhälften. In der oberen Formhälfte sind im Bereich des Deckelrands eine oder mehrere Nadelverschlussdüsen zum Einspritzen der Elastomerkomponente für die Deckeldichtung angeordnet. Diese Nadelverschlussdüsen besitzen jeweils eine Düsennadel, die neben der Offenstellung, in der die Schmelzeaustrittsöffnung freigegeben ist und einer Geschlossenstellung, in der die Schmelzeaustrittsöffnung verschlossen ist, aus dem Düsengehäuse und der Schmelzeaustrittsöffnung heraus verfahrbar ist.
Die Arbeitsweise dieser bekannten Vorrichtung ist wie folgt:
In einem ersten Spritzschritt für die Thermoplastkomponente befindet sich der Kern in seiner vorderen Stellung und die Düsennadel der Nadelverschlussdüse der Elastomerkomponente ist aus ihrem Gehäuse herausgefahren und zwar bis auf Anschlag mit der Stirnseite des Kerns. Die Nadelverschlussdüse für die Elastomerkomponente ist geschlossen und durchdringt die Kavität der Thermplastkomponente. In diesem Bereich wird ein Loch in dem Gefäßdeckel gebildet. Wenn der Gefäßdeckel ausreichend abgekühlt ist, wird der Kern um eine kurze Strecke nach hinten verfahren, so daß zwischen der Unterseite des Gefäßdeckels und der Stirnseite des Kerns eine zweite, kreisringförmige Kavität für den Dichtring aus der Elastomerkomponente, gebildet. Die Düsennadel ist in die hinterste Stellung zurückgefahren, so dass die Schmelzeaustrittsöffnung für die Elastomerkomponente freigegeben ist und die Elastomerschmelze über das Loch in dem Eimerdeckel in die zweite Kavität einfließen kann. Nachdem die zweite Kavität gefüllt ist, wird die Düsennadel soweit nach vorne verfahren, dass die Stirnseite der Düsennadel mit der oberen Formhälfte bündig abschließt und der Gefäßdeckel eine ebene Oberfläche in diesem Bereich erhält. Der Dichtring ist damit an die Unterseite des Eimerdeckels angeformt und durchdringt diesen in dem Bereich des Lochs in dem Gefäßdeckel, also in dem Bereich, in dem die Düsennadel im ersten Spritzschritt auf Anschlag mit dem Kern stand. Falls für das Einspritzen der Elastomerkomponente mehrere Nadelverschlussdüsen eingesetzt werden, werden der Anzahl dieser Nadelverschlussdüsen entsprechend viele Löcher in dem Gefäßdeckel gebildet, in die der Dichtring hineinragt.

Aus diese Weise können mehrkomponentige Kunststoffteile zwar ohne Drehwerkzeug hergestellt werden. Nachteilig ist jedoch, dass die zweite Komponente durch einen Kanal in der ersten Komponente eingespritzt wird, so dass es an der Oberfläche der ersten Komponente Stellen gibt, an denen die zweite Komponente sichtbar wird. Die erste Komponente weist quasi "Fehlstellen" auf.

Es kann nun erforderlich sein, insbesondere bei hochwertigen mehrkomponentigen Kunststoffteilen, dass die erste Komponente frei von solchen produktionsbedingten "Fehlstellen" ist und die Oberfläche stattdessen durchgängig nur aus einer Komponente besteht.

Daher liegt der Erfindung die Aufgabe zugrunde, ausgehend von dem gattungsbildenden Stand der Technik eine Vorrichtung anzugeben, mit der mehrkomponentige Kunststoffformteile ohne Durchbrüche bzw. "Fehlstellen" und ohne Verwendung eines Drehwerkzeugs herstellbar sind.

Die Lösung dieser Aufgabe erfolgt durch eine Vorrichtung mit den Merkmalen der nebengeordneten Patentansprüche 1 und 2. Vorteilhafte Weiterentwicklungen und Ausgestaltungen finden sich in den Unteransprüchen. Kern der vorliegenden Erfindung ist es, in einer der Formhälften einen verschiebbaren Kern und in diesem eine oder mehrere Nadelverschlussdüsen vorzusehen, deren Düsennadeln neben der Offen- und Geschlossenstellung in weitere Stellungen verfahrbar sind und die mit dem Kern und den übrigen Teilen der Formhälften derart zusammenwirken, dass für verschiedene Kunststoffkomponenten verschiedene Kavitäten gebildet werden können. Ein erster Vorteil der vorliegenden Erfindung liegt daher darin, dass auf diese Weise gänzlich auf ein Drehwerkzeug verzichtet werden kann. Ein zweiter Vorteil ergibt sich dadurch, dass die Nadelverschlussdüsen in dem Kern untergebracht sind, weswegen die Komponenten derart gespritzt werden können, dass sie sich nicht durchdringen und somit keine "Fehlstellen" gebildet werden. Je nach Formteil kann auch die Nadelverschlussdüse selbst mit ihrem vorderen Ende dazu beitragen, mit den übrigen Teilen der Formhälften und dem Kern Kavitäten zu bilden (Patentanspruch 2). Je nach Formteil und Werkzeuggestaltung kann man auch gegenüber dem Kern verfahrbare und im Kern befestigte Nadelverschlussdüsen miteinander kombinieren (Unteranspruch 4), was die Vielseitigkeit der vorliegenden Erfindung verdeutlicht.

Nachfolgend soll die Erfindung anhand von Ausführungsbeispielen und unter Bezugnahme auf die Figuren 1 bis 3b näher erläutert werden.
Es zeigen:
- Fig.1:: Eimer und Deckel mit angespritztem Dichtring gemäß der Erfindung;
- Fig. 2a - 2b:: erste Ausführungsform eines erfindungsgemäßen Spritzgießwerkzeugs in verschiedenen Arbeitsstellungen;
- Fig. 3a - 3b:: zweite Ausführungsform eines erfindungsgemäßen Spritzgießwerkzeugs in verschiedenen Arbeitsstellungen.

Die Erfindung soll anhand einer Vorrichtung zur Herstellung eines thermoplastischen Eimerdeckels mit einer Elastomerdichtung beschrieben werden. Es versteht sich von selbst, dass die Erfindung nicht auf die Herstellung von Thermoplastteilen mit angespritztem Elastomerteil beschränkt ist, sondern auch für andere Kunststoffverbunde geeignet ist, d.h. universell beim Mehrkomponenten- und Mehrfarbenspritzgießen brauchbar ist.

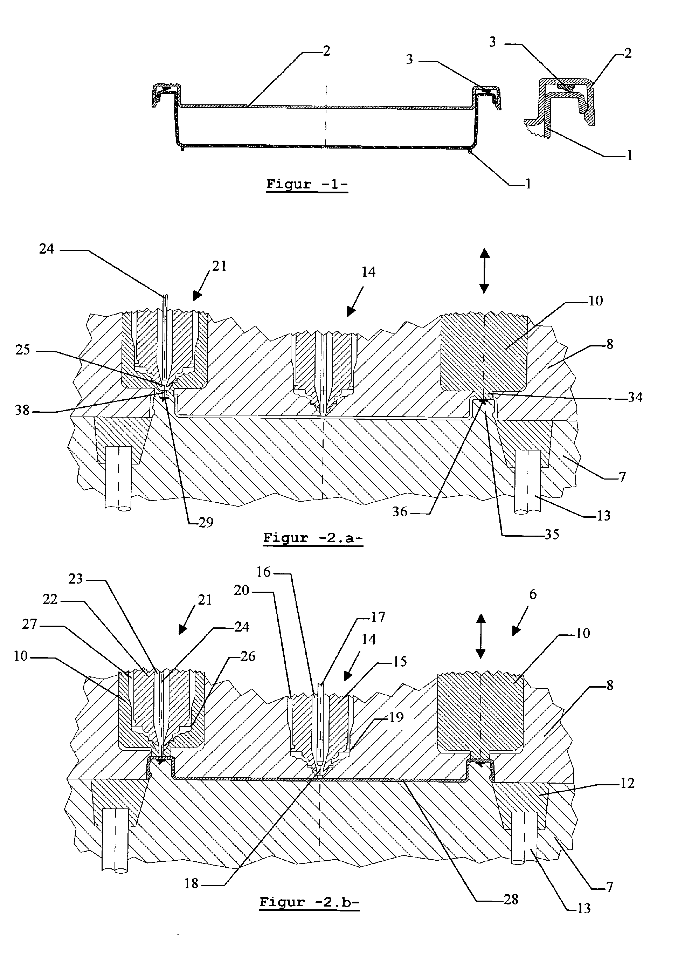

Mit der Erfindung ist ein Eimerdeckel 2 mit einem Dichtring 3 herstellbar, wie er in Figur 1 gezeigt ist. Figur 1 zeigt einen in herkömmlicher Weise spritzgegossenen Eimer 1 aus einem thermoplastischen Kunststoff und den darauf aufgesetzten mit einer erfindungsgemäßen Vorrichtung hergestellten Eimerdeckel 2 mit einem Dichtring 3 aus einem Elastomer. Der Eimerdeckel 2 besitzt an seinem äußeren Rand einen Abschnitt 4 mit im wesentlichen U-förmigem Querschnitt und einer Wulst 5 am unteren Ende dieses Abschnitts. Auf diese Weise sitzt der Eimerdeckel 2 dicht und fest auf dem Eimer 1. Geeignete Kombinationen für den Kunststoffverbund sind beispielsweise PP für den Eimerdeckel 2 und EPDM für den Dichtring 3 oder PA für den Eimerdeckel 2 und LSR für den Dichtring 3. Die Oberfläche des Eimerdeckels 2 ist durchgehend ausgebildet und weist keine Unterbrechungen auf.

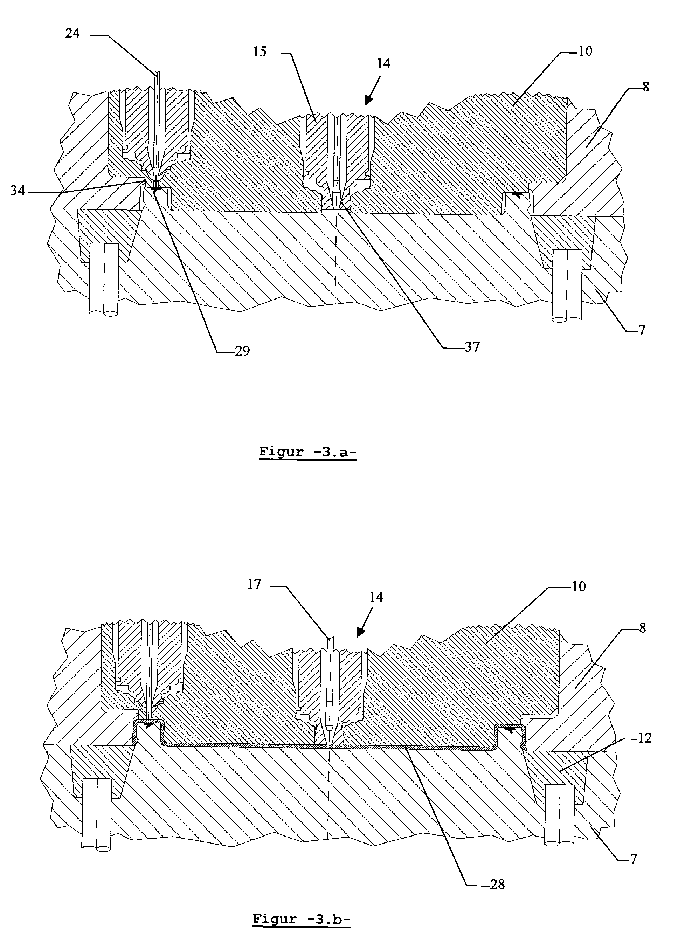

Die Figuren 2a und 2b zeigen eine erste Ausführungsform eines erfindungsgemäßen Spritzgießwerkzeugs zur Herstellung eines solchen Eimerdeckels.

Ein Spritzgießwerkzeug 6 weist eine erste, untere Formhälfte 7, eine zweite, obere Formhälfte 8, sowie in der oberen Formhälfte 8 einen Kern 10 auf. Der Kern 10 ist entsprechend dem herzustellenden Formteil im wesentlichen zylindersymmetrisch und der Kontur des herzustellenden Dichtrings folgend hohlzylindrisch ausgebildet. Über eine hier nicht dargestellte Antriebseinrichtung kann der Kern 10 gegenüber der Formhälfte 8 vor- und zurückgefahren werden kann. Desweiteren ist in der unteren Formhälfte 7 ein Abstreifer 12 vorgesehen, der über mehrere Stangen 13 an eine hier nicht dargestellte Antriebseinrichtung angeschlossen ist, mit der der Abstreifer 12 vor- und zurückgefahren werden kann, wobei beim Vorfahren ein fertiger Eimerdeckel 2 mit Dichtring 3 von der unteren Formhälfte 7 abgestreift und mittels eines Entnahmehandlings aus dem geöffneten Spritzgießwerkzeug entnommen werden kann.

In der oberen Formhälfte 8 befindet sich zum Einspritzen der Thermoplastkomponente für den Eimerdeckel 2 im Zentrum der Formhälfte eine erste Nadelverschlussdüse 14, im wesentlichen bestehend aus dem Düsengehäuse 15, einem Schmelzekanal 16 sowie einer Düsennadel 17, die in der Nadelverschlussdüse zwischen einer Offenstellung, in der die Schmelzeaustrittsöffnung 18 freigegeben ist und einer Geschlossenstellung, in der die Schmelzeaustrittsöffnung 18 verschlossen ist, verfahrbar ist. Das Düsengehäuse 15 ist nur an wenigen Punkten 19 in Kontakt mit der Formhälfte 8 und bildet im übrigen einen Ringspalt 20, so dass es gegenüber der Formhälfte 8 thermisch isoliert ist.

Desweiteren sind in dem in der oberen Formhälfte 8 angeordneten Kern 10 eine oder mehrere weitere Nadelverschlussdüsen 21 zum Einspritzen der Elastomerkomponente angeordnet. Bei der Herstellung von Eimerdeckeln mit angespritztem Dichtring hat es sich bewährt, zwei bis vier solcher Nadelverschlussdüsen über den Umfang verteilt einzusetzen. Der besseren Übersicht halber ist in den Figuren nur eine dieser Nadelverschlussdüsen eingezeichnet. Diese Nadelverschlussdüsen besitzen im wesentlichen ein Düsengehäuse 22, einen Schmelzekanal 23 sowie eine Düsennadel 24. Letztere ist neben der Offenstellung, in der die Schmelzeaustrittsöffnung 25 freigegeben ist und einer Geschlossenstellung, in der die Schmelzeaustrittsöffnung 25 verschlossen ist, in weitere Stellungen aus dem Düsengehäuse 22 und der Schmelzeaustrittsöffnung 25 heraus verfahrbar, worauf weiter unten bei der Beschreibung der Arbeitsweise der Vorrichtung näher eingegangen wird. Das Düsengehäuse 22 ist nur an wenigen Punkten 26 in Kontakt mit der Formhälfte 8 und bildet im übrigen einen Ringspalt 27, so dass es gegenüber der Formhälfte 8 thermisch isoliert ist.

Das vorstehende, kreisringförmige vordere Endstück 34 des Kerns 10 weist eine Bohrung 38 mit einem Durchmesser entsprechend dem Durchmesser der Düsennadel 24 auf und kann auf Anschlag mit dem kreisringförmigen Vorderteil 35 der unteren Formhälfte 7 verfahren werden, das eine kreisringförmige Ausnehmung 36 für die Ausformung des Dichtrings 3 aufweist.

In einem ersten Spritzschritt (Fig.2a) wird vorliegend zunächst die Elastomerkomponente, also der Dichtring 3 gespritzt. Zu diesem Zweck befindet sich der Kern 10 auf Anschlag mit dem Vorderteil 35 der unteren Formhälfte 7, so dass die Ausnehmung 36 überdeckt ist und eine Kavität 29 für die Elastomerkomponente gebildet wird. Die Düsennadel 24 der Elastomerkomponente befindet sich in der hinteren (Offen-) Stellung und die Elastomerschmelze kann in die Kavität 29 einfließen. Während dieser Zeit ist die Nadelverschlussdüse 14 für die Thermoplastkomponente geschlossen. Wenn der Dichtring 3 genügend ausgehärtet ist, wird die Düsennadel 24 soweit vorgefahren, dass die Stirnseite der Düsennadel 24 mit der Stirnseite des Endstücks 34 des Kerns 10 bündig abschließt. Anschließend oder parallel dazu wird der Kern 10 um eine kurze Strecke nach hinten verfahren, so dass die Stirnseite des Endstücks 34 bündig mit der Oberfläche der Formhälfte 8 in diesem Bereich abschließt. Auf diese Weise wird die Kavität 28 für die Thermoplastkomponente, also den Eimerdeckel 2, gebildet und die Nadelverschlussdüse 14 für die Thermoplastkomponente kann geöffnet werden (zweiter Spritzschritt, siehe Fig.2b).

Wenn der Eimerdeckel 2 genügend abgekühlt ist, kann er mittels der Abstreifer 12 von der unteren Formhälfte 7 abgehoben und aus dem Spritzgießwerkzeug entnommen werden.

Die Figuren 3a und 3b zeigen eine zweite Ausführungsform der Erfindung, deren Abwandlung zu der zuvor beschriebenen ersten Ausführungsform darin besteht, dass der Kern 10 durchgehend als Bauteil mit zylindrischem Querschnitt gestaltet ist und dass die Nadelverschlussdüse 14 für die Thermoplastkomponente in einer zentralen Bohrung im Kern 10 verfahrbar ist. Das vordere Endstück 37 des Düsengehäuses 15 ist so gestaltet, dass seine Stirnseite eben ist und mit der Stirnseite des Kerns 10 bündig positioniert werden kann. Im ersten Spritzschritt wird wie im zuvor beschriebenen Ausführungsbeispiel zunächst die Kavität 29 für die Elastomerkomponente gebildet und der Dichtring 3 geformt. Wenn der Dichtring 3 genügend ausgehärtet ist, wird die Düsennadel 24 soweit vorgefahren, dass die Stirnseite der Düsennadel 24 mit der Stirnseite des Endstücks 34 des Kerns 10 bündig abschließt. Anschließend oder parallel dazu wird der Kern 10 um eine kurze Strecke nach hinten verfahren, so dass die Stirnseite des vorderen Endstücks 34 des Kerns 10 bündig mit der Oberfläche der Formhälfte 8 in diesem Bereich abschließt. Parallel dazu wird die Nadelverschlussdüse 14 soweit nach vorne verfahren, dass die Stirnseite des vorderen Endstücks 37 des Düsengehäuses 15 bündig mit der Stirnseite des Kerns 10 in diesem Bereich abschließt. Alternativ kann sich die Nadelverschlussdüse 14 auch von Anfang an in dieser Stellung befinden, so dass lediglich der Kern 10 in diese Stellung zurückgefahren werden muss. Auf diese Weise wird die Kavität 28 für die Thermoplastkomponente, also den Eimerdeckel 2, gebildet und die Nadelverschlussdüse 14 für die Thermoplastkomponente kann geöffnet werden. Wenn der Eimerdeckel 2 genügend abgekühlt ist, kann er mittels der Abstreifer 12 von der unteren Formhälfte abgehoben und aus dem Spritzgießwerkzeug entnommen werden.

### Bezugszeichenliste

- 1: Eimer
- 2: Eimerdeckel
- 3: Elastomerischer Dichtring
- 4: U-förmiger Rand des Eimerdeckels
- 5: Wulst
- 6: Spritzgießwerkzeug
- 7: Untere Formhälfte
- 8: Obere Formhälfte
- 9: -
- 10: Kern
- 11: -
- 12: Abstreifer
- 13: Betätigungsstangen für den Abstreifer
- 14: Nadelverschlussdüse für die Thermoplastkomponente
- 15: Düsengehäuse der Nadelverschlussdüse 14
- 16: Schmelzekanal für die Thermoplastkomponente
- 17: Düsennadel der Nadelverschlussdüse 14
- 18: Schmelzeaustrittsöffnung für die Thermoplastkomponente
- 19: Kontaktpunkte der Nadelverschlussdüse 14
- 20: Ringspalt zwischen der Nadelverschlussdüse 14 und der Formhälfte 8
- 21: Nadelverschlussdüse für die Elastomerkomponente
- 22: Düsengehäuse der Nadelverschlussdüse 21
- 23: Schmelzekanal für die Elastomerkomponente
- 24: Düsennadel der Nadelverschlussdüse 21
- 25: Schmelzeaustrittsöffnung für die Elastomerkomponente
- 26: Kontaktpunkte der Nadelverschlussdüse 21
- 27: Ringspalt zwischen der Nadelverschlussdüse 21 und der Formhälfte 8
- 28: Kavität für die Thermoplastkomponente
- 29: Kavität für die Elastomerkomponente
- 30: -
- 31: -
- 32: -
- 33: -
- 34: Vorderes Endstück des Kerns 10
- 35: Vorderteil der unteren Formhälfte 7
- 36: Kreisringförmige Ausnehmung
- 37: Vorderes Endstück des Düsengehäuses 15
- 38: Bohrung im Kern 10 für die Düsennadel 24

## Patentansprüche

1. Vorrichtung zum Spritzgießen von mehrkomponentigen Kunststoffformteilen, mit einer ersten Formhälfte (7) und einer zweiten Formhälfte (8), wobei eine der Formhälften (7, 8) einen verschiebbaren Kern (10) aufweist, wobei wenigstens eine Nadelverschlussdüse (21) mit einer mehrfach verstellbaren Düsennadel (24) vorgesehen ist, und wobei diese Düsennadeln (24) derart in mehrere Stellungen verfahrbar sind, dass die Düsennadeln (24) neben der Offen- und Geschlossenstellung in weitere Stellungen verfahrbar sind, dergestalt, dass die Düsennadeln (24) in den verschiedenen weiteren Stellungen zusammen mit dem Kern (10) und den beiden Formhälften (7, 8) verschiedene Kavitäten (28, 29) für verschiedene Kunststoffkomponenten (2, 3) bilden,
**dadurch gekennzeichnet,**
**dass** der Kern (10) und eine oder mehrere der mit den mehrfach verstellbaren Düsennadeln (24) ausgestatteten Nadelverschlüssdüsen (21) in derselben Formhälfte (8) angeordnet sind, dass diese Nadelverschlussdüsen (21) in dem Kern (10) befestigt sind und dass der Kern (10) eine Bohrung (38) aufweist, durch die die Düsennadeln (24) dieser Nadelverschlussdüsen (21) hindurch verfahrbar sind.

2. Vorrichtung zum Spritzgießen von mehrkomponentigen Kunststoffformteilen, mit einer ersten Formhälfte (7) und einer zweiten Formhälfte (8), wobei eine der Formhälften (7,8) einen verschiebbaren Kern (10) aufweist, und wobei eine oder mehrere Nadelverschlussdüsen (14,21) vorgesehen sind,
**dadurch gekennzeichnet,**
**dass** die Nadelverschlussdüsen (14, 21) in dem Kern (10) angeordnet sind, dass die Nadelverschlussdüsen (14, 21) und der Kern (10) relativ zueinander verfahrbar sind und dass die vorderen Enden (37) dieser Nadelverschlussdüsen (14, 21) mit dem Kern (10) und den Formhälften (7, 8) Kavitäten (28, 29) bilden können.

3. Vorrichtung nach Anspruch 2,
**dadurch gekennzeichnet,**
**dass** wenigstens eine der verfahrbaren Nadelverschlussdüsen (21) mit einer mehrfach verstellbaren Düsennadel (24) ausgestattet ist, wobei die Düsennadel (24) derart in mehrere Stellungen verfahrbar ist, dass die Düsennadel (24) neben der Offen- und Geschlossenstellung in weitere Stellungen verfahrbar ist, dergestalt, dass die Düsennadel (24) in den verschiedenen weiteren Stellungen zusammen mit dem vorderen Ende der Nadelverschlussdüse (21), dem Kern (10) und den beiden Formhälften (7, 8) Kavitäten bildet.

4. Vorrichtung nach Anspruch 2 oder 3,
**dadurch gekennzeichnet,**
**dass** zusätzlich zu den verfahrbaren Nadelverschlussdüsen (14) eine oder mehrere weitere Nadelverschlussdüsen (21) in dem Kern (10) befestigt sind, und dass der Kern (10) Bohrungen (38) aufweist, durch die die Düsennadeln (24) dieser Nadelverschlussdüsen (21) hindurch verfahrbar sind.

5. Verwendung einer Vorrichtung nach einem der Ansprüche 1 bis 8 zur Herstellung eines mehrkomponentigen Kunststoffformteils (1), umfassend ein Thermoplastteil (2) und ein Elastomerteil (3), wobei das Elastomerteil (3) über die Nadelverschlussdüsen (21) mit den mehrfach verstellbaren Düsennadeln (24) eingespritzt wird.

6. Verwendung nach Anspruch 9,
**dadurch gekennzeichnet,**
**dass** für das Thermoplastteil (2) PP und für das Elastomertteil (3) EPDM verwendet wird.

7. Verwendung nach Anspruch 9,
**dadurch gekennzeichnet,**
**dass** für das Thermoplastteil (2) PA und für das Elastomerteil (3) LSR verwendet wird.

8. Verwendung nach einem der Ansprüche 9 bis 11,
**dadurch gekennzeichnet,**
**dass** einer oder mehreren Kunststoffkomponenten ein Haftvermittler beigemischt ist.

9. Verwendung nach einem der Ansprüche 9 bis 11 zur Herstellung eines thermoplatischen Deckels (2) mit einer angespritzten Elastomerdichtung (3).
